# EUROPEAN PATENT APPLICATION

(11) **EP 3 757 863 A1**
(43) Date of publication of application: **30.12.2020**
(21) Application number: 19382553.6
(22) Date of filing: 28.06.2019
(51) Int. Cl.: G06F 40/166

(54) **COMPUTER-IMPLEMENTED METHOD AND COMPUTER-READABLE MEDIUM FOR ENABLING DATA REFERENCING USING ONE OR MULTIPLE DATA CONNECTIONS BETWEEN ONE OR MULTIPLE SOURCE SPREADSHEETS AND ONE OR MULTIPLE DESTINATION SPREADSHEETS**

(71) Applicant: Sheetgo Europe, SL., 46024 Valencia (ES)
(72) Inventor: Lambert, Rault Yannick, S/N - Edificio Lanzadera la Ma 46024 Valencia (ES)
(74) Representative: Grünecker Patent- und Rechtsanwälte PartG mbB

(57) **Abstract**

The invention refers to a computer-implemented method for enabling data referencing using one or multiple data connections (48) between one or multiple source spreadsheets and one or multiple destination spreadsheets with the steps: defining, by a user: a first spreadsheet (49) to be the source spreadsheet; defining a second spreadsheet (50) to be the destination spreadsheet; a source (56) for a data connection in the source spreadsheet; a destination (61) for the data connection in the destination spreadsheet, the data connection being from source to destination; then storing information defining the data connection separate both from first and second spreadsheet, the information including source and destination; transferring data from source to destination through the data connection using the stored information. Moreover, the invention refers to a computer-readable medium containing computer executable instructions which, when executed, cause the computing device to perform the method.

## Description

The invention refers to a computer-implemented method for enabling data referencing using one or multiple data connections between one or multiple source spreadsheets and one or multiple destination spreadsheets according to claim 1, and a computer-readable medium for enabling data referencing using one or multiple data connections between one or multiple source spreadsheets and one or multiple destination spreadsheets according to claim 16.

### Prior art

Electronic spreadsheet technology is widely used because its flexibility and ease of use. The main feature of a spreadsheet is the ability to input data in cells of the spreadsheet and the capacity to reference multiple cells in the spreadsheet in formulas to perform complex calculations in the spreadsheet, allowing users to perform in-depth analysis and data transformation.

In all electronic spreadsheet technology, referencing of cells enables the interconnectivity inside a spreadsheet and it makes this technology flexible to create unlimited types of applications. Thus, allowing a user to change an origin cell and every cell referencing from the changed cell to another cell will be recalculated based on the new value that has either been added, or edited in the origin cell.

In conventional spreadsheet systems, the process of transferring data from a first spreadsheet to a second spreadsheet may be executed using copy and paste functions, or native spreadsheet software formula of referencing. In the case of manual copying and pasting, the user needs to execute the copy command in the first spreadsheet, open the second spreadsheet, and execute the paste command, hence, allocating her/his time to perform the process.

### Problem

The problem to be solved by the invention is providing a reliable referencing inside and across spreadsheets files.

### Solution

This problem is solved by the computer-implemented method of claim 1, and the computer-readable medium of claim 16. Additional embodiments are disclosed in the dependent claims.

In the following, several terms in relation with spreadsheet technology will be used, and their meaning will be explained in the following:
Spreadsheet file: A file that can contain multiple spreadsheets (sometimes "spreadsheets" are called "worksheets").

A spreadsheet: comprises columns and rows with cells used to fill in information/data.

A cell in a spreadsheet: e.g., the notation (=C5) refers to the value within cell C5

A range of cells in a spreadsheet: e.g., the notation (=A1:B3) refers to the cell range A1 through B3, i.e., the comprised cells are A1, A2, A3, B1, B2, B3.

A tab: an icon used to switch between various spreadsheets in a spreadsheet file when activated by a user.

A source spreadsheet: a spreadsheet from where data is transferred to another spreadsheet, i.e., to a destination spreadsheet.

A destination spreadsheet: a spreadsheet to where data is transferred from the source spreadsheet. A destination spreadsheet may be a source spreadsheet for another spreadsheet.

Disclosed is the computer-implemented method for enabling data referencing using one or multiple data connections between one or multiple source spreadsheets and one or multiple destination spreadsheets, the method comprising the following steps:
defining, by a user, a first spreadsheet to be the source spreadsheet, the first spreadsheet being of the user;
defining, by the user, a second spreadsheet to be the destination spreadsheet;
defining, by the user, a source for a data connection in the source spreadsheet;
defining, by the user, a destination for the data connection in the destination spreadsheet, the data connection being from the source to the destination;
storing information defining the data connection, wherein the information is stored separate from the first spreadsheet and separate from the second spreadsheet, the information including the source and the destination; and
transferring data from the source to the destination through the data connection using the stored information defining the data connection.

The data connection may be considered to be a referencing from a position, i.e., the source, in the source spreadsheet file to another position, i.e., the destination, in the destination source file. Such a position may be given by notation known in the field of spreadsheet technology, e.g., C5 for a single cell, or A1:B3 for a range of cells.

In view of the ordering of the method steps, the source spreadsheet are defined before defining the source, and the destination spreadsheet has to be defined before defining the destination.

After defining the source spreadsheet, the source, the destination spreadsheet and the destination, information defining the data connection may be stored, as the data connection is from the source to the destination, and thus, the source and the destination are to be known beforehand.

After storing the information defining the data connection, data may be transferred from the source to the destination through the data connection as for transferring also the stored information defining the data connection is used.

As also indicated below, the first spreadsheet and the second spreadsheet may be comprised by a single spreadsheet file; in this case, the information defining the data connection may not only stored separate from the first spreadsheet and separate from the second spreadsheet, but may also be stored separate from the single spreadsheet file.

As also indicated below, the first spreadsheet may be comprised by a first spreadsheet file and the second spreadsheet may be comprised by a second spreadsheet file. In this case, the information defining the data connection may not only be stored separate from the first spreadsheet and separate from the second spreadsheet, but this information may also be stored separate from the first spreadsheet file and separate from the second spreadsheet file. This information may be stored in server-side database.

The step of defining, by the user, the source may comprise defining the source as a single cell, a range of cells, a tab within the source spreadsheet, or all of the tabs in the source spreadsheet, and when the source is the single cell or the ranges of cells, then defining, by the user, the destination in the destination spreadsheet as a single cell or a range of cells, and when the source is the tab or all the tabs, then defining, by the user, the destination spreadsheet as the destination.

The source spreadsheet and the destination spreadsheet, and thus the source spreadsheet file and the destination spreadsheet file may be stored in an online storage, e.g., an online cloud storage.

The source spreadsheet and the destination spreadsheet may be in a single spreadsheet file. Thus, a data connection between different spreadsheets in one spreadsheet may be established.

The single spreadsheet file may be defined by a single unique identifier.

Alternatively, the source spreadsheet may be in a first spreadsheet file and the destination spreadsheet may be in a second spreadsheet file, wherein the first spreadsheet file and the second spreadsheet file are different. Thus, a data connection across different spreadsheet files and between different spreadsheets may be established.

The first spreadsheet file may be defined by a first unique identifier and the second spreadsheet file may be defined by a second unique identifier.

The computer-implemented method may further comprise the steps of: using credentials granted by the user to access a directory of the user in a cloud storage of the user; locating and opening the first spreadsheet file; copying data from a range of cells, a cell, or a tab of the source in the source spreadsheet of the first spreadsheet file; storing the data in a temporary memory; locating the second spreadsheet file; transferring the copied data into the range of cells, the cell, or the tab in the destination spreadsheet of the second spreadsheet file; and optionally closing the first spreadsheet file before transferring the copied data.

The process of copying data in the source spreadsheet and transferring the copied data in the destination spreadsheet may be performed on a server computer. The temporary medium may be a memory of the server computer. After having transferred the copied data in the destination spreadsheet, the temporary memory may be cleaned.

In view of the ordering of the method steps, the first spreadsheet file has to be located and opened before data from a range of cells, a cell, or a tab of the source in the source spreadsheet of the first spreadsheet file may be copied.

The second spreadsheet file may be located before, after or at the same time as the first spreadsheet file is located and opened. However, the second spreadsheet file has to be located before transferring the copied data into the range of cells, the cell, or the tab in the destination spreadsheet of the second spreadsheet file.

Optionally, the first spreadsheet file may be closed before transferring the copied data.

The computer-implemented method may further comprise the step of automatically triggering transferring of the data in the data connection based on changes in a cell, a range of cells, or a tab in the source spreadsheet, or based on time.

After the step of transferring data from the source to the destination through the data connection using the stored information defining the data connection, the computer-implemented method may further comprise the step of automatically tracking from where in the source spreadsheet the data in the destination spreadsheet originated, and the step of displaying a real-time map showing a route the data travelled across the first spreadsheet file, the second spreadsheet file, and one of range of cells, cell, and tab.

The first spreadsheet file may be of a first user and the second spreadsheet file may be of a second user, wherein the first user and the second user are different, or the first spreadsheet and the second spreadsheet are of a single user. Thus, a data connection across different spreadsheet files of different users may be established, or a data connection across different spreadsheet files of a single user may be established.

The first spreadsheet and the second spreadsheet may be maintained in a closed state or in an opened state by the user during the defining steps. The first spreadsheet and the second spreadsheet may be accessible anytime either closed or opened when being stored in an online storage, e.g., an online cloud storage.

The spreadsheet file, or the first spreadsheet file and the second spreadsheet file may be maintained in a closed state by the user during the defining steps. The first spreadsheet file and the second spreadsheet file may be accessible anytime either closed or opened when being stored in a online storage, e.g., online cloud storage.

A spreadsheet generally is comprised by a spreadsheet file, thus even in the case where - above, here, or in the following - no spreadsheet file is mentioned for a spreadsheet it may be assumed that the spreadsheet is comprised by a spreadsheet file.

During the step of transferring data from the source to the destination through the data connection using the stored information defining the data connection, the source spreadsheet and the destination spreadsheet may be kept closed or they may be opened.

Keeping the source spreadsheet and the destination spreadsheet closed may refer to not opening the source spreadsheet and the destination spreadsheet on a display.

During the step of transferring data from the source to the destination through the data connection using the stored information defining the data connection, the spreadsheet file, or the first spreadsheet file and the second spreadsheet filed may be kept closed or they may be opened.

Keeping the spreadsheet file, or the first spreadsheet file and the second spreadsheet file closed may refer to not opening the spreadsheet file, or the first spreadsheet file and the second spreadsheet file on a display.

The step of storing the information defining the data connection, wherein the information is stored separate from the first spreadsheet and separate from the second spreadsheet, may comprise storing the information in a separate file, optionally on a separate computing device. The separate file is no spreadsheet file. The separate file may be a server side database.

The separate file may be a file store in an online storage of the user where spreadsheet files are stored, too. Alternatively, the separate file may be a file stored in another online storage.

The separate computing device may be a computing device separate from a computing device on which the computer-implemented method may be executed.

The information defining the data connection may be stored in a database to be able to maintain the data connection established. However, when the data is being transferred from the source to the destination through the data connection, no third spreadsheet file is created.

For executing the computer-implemented method, two computer devices may be used:
1. A first computer device with a user online storage: It's where the source (first spreadsheet file) and the destination (second spreadsheet file) are hosted (and many other spreadsheet files). Some examples of online files storages are Google Drive, Microsoft OneDrive, Dropbox, Box, etc.
2. A server computer: It's where the program/software runs. From here comes the trigger and instructions to go to the user online storage, to open the first spreadsheet, to copy the data, to open the second spreadsheet, and to transfer the copied data. When we "copy the data" the data pass by a temporary memory, e.g., the server memory, but it's only while the data is being processed. After processing, the temporary memory is cleaned.

In more detail, for using the invention, a user may store his spreadsheet files on one or more online storages, or a first and a second user may store their spreadsheet files on one or more online storages, wherein the one or more online storages (in both cases) may be on one or more online servers on the internet. An online storage may be among others: Google Drive, Microsoft OnDrive, Dropbox, Box. Each online storage provides for third-party applications its own method to access the stored files. For instance, Google Drive provides the "Drive API" for third-party applications, the resources to access the user's files, on the user behalf, using the user's previously granted credentials.

Various formats of spreadsheet files that allow for storing in one or more online storages may be used. It is also possible to use a first spreadsheet file, e.g., comprising the source spreadsheet, written in a first format and a second spreadsheet file, e.g., comprising the destination spreadsheet, written in a second format in a method for enabling data referencing using one or more data connections between one or multiple source spreadsheets and one or multiple destination spreadsheets.

Formats for spreadsheet files may be among others: Microsoft Excel Spreadsheet (file extension .XLS); Microsoft Excel Binary Spreadsheet (file extension .XLSB); Microsoft Excel Open XML Macro-Enabled Spreadsheet (file extension .XLSM); Microsoft Excel Open XML Spreadsheet (file extension .XLSX); Numbers iCloud Document (file extension .NUMBERS-TEF); Numbers Spreadsheet File (file extension .NUMBERS); Google Drive Spreadsheet (file extension .GSHEET); OpenDocument Spreadsheet (file extension .ODS).

The invention runs on an online server, and not in a personal computer of the user (first/second user). Moreover, the invention does not run or interact with local spreadsheet files of a user (first/second user) being stored in its personal computer; the invention only runs or interacts with spreadsheet files stored in the one or more online storages.

The invention enables a user to connect his spreadsheets or ranges or cells in one spreadsheet file and to connect his spreadsheets or ranges or cells across spreadsheet files. The invention may also enable the user to connect one or more of his spreadsheets or ranges or cells of his own spreadsheet files to spreadsheet files of another user.

Because the one or more online storages of the user (first/second user) and the invention are located on online servers, all the transactions between the invention, the online storages, and spreadsheet files run over the internet, basically through HTTP (Hypertext Transfer Protocol) protocol of communication. All interactions between the user (first/second user) and the invention interface are made through an internet browser.

Thus, for example, the invention may use the user credentials to access a user Google Drive repository, i.e., the online storage of the user. The invention knows which spreadsheet files comprise source and destination (i.e. are source spreadsheet file and destination spreadsheet file, respectively) because this was previously defined by the user. By using, e.g., the "Drive API", the invention may access the source spreadsheet file and the destination spreadsheet file, may load it on a temporary memory of the online server, copy the source spreadsheet or range or cell defined by the user from the source, and paste it on the destination spreadsheet or range or cell, also defined by the user. The states of the spreadsheet files may be open, i.e., being used at the moment, or closed. When a spreadsheet file is open, it may be in the user's internet browser or spreadsheet software editor, e.g., Microsoft Excel.

A computer-readable medium contains computer executable instructions which, when executed by a processor of a computing device, cause the computing device to perform a method for creating at least one data connection between a source spreadsheet and a destination spreadsheet as described above or below. The computing device may be an online server.

Various embodiments of the invention will be illustrated with reference to the enclosed figures. In the figures:
Figure 1 shows a schematic view of a spreadsheet file and its contents as known from prior art;
Figure 2 shows referencing of cells inside one spreadsheet to perform calculations or analysis as known from prior art;
Figure 3 shows a source spreadsheet and a destination spreadsheet being connected by a data connection;
Figure 4 shows a computing environment executing the technology of creating a data connection between a source spreadsheet and a destination spreadsheet;
Figure 5 shows a data connection between two spreadsheet files of different formats;
Figure 6 shows various data connections between different spreadsheets and referencing inside a spreadsheet;
Figure 7A shows a graphic visualisation of updates based on changes in the source;
Figure 7B shows a graphic visualisation of updates based on time; and
Figure 8 shows a graphic visualisation of a trace route.

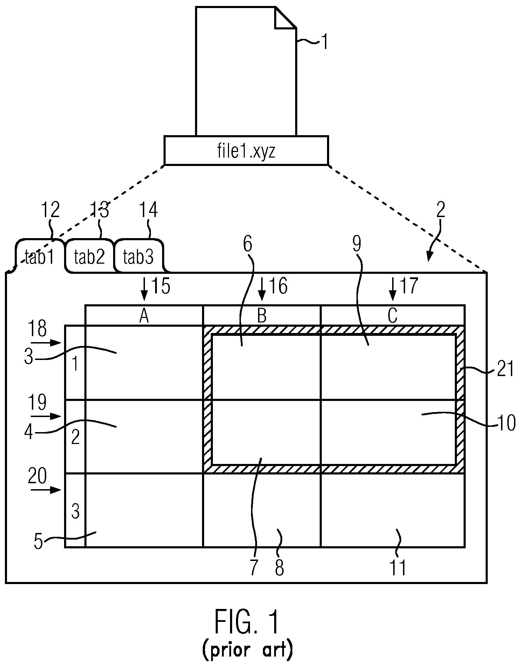

Figure 1 shows a schematic view of a spreadsheet file 1 and its contents as known from prior art. On a display device of a computing system, the spreadsheet file 1, exemplarily called file1.xyz, may be displayed by an icon as depicted in Figure 1, or in a list of files, e.g., of the desktop and/or in web browsers, the spreadsheet file 1 may be indicated by its name.

After opening the spreadsheet file 1, a first spreadsheet 2 comprised by the spreadsheet file 1 pops up comprising columns 15, 16, 17 and rows 18, 19, 20, here exemplary three columns 15-17 with column letters A, B and C and three rows 18-20 with row numbers 1, 2 and 3, with cells 3, 4, 5, 6, 7, 8, 9, 10, 11. The spreadsheet file 1 exemplarily comprises three spreadsheets as can be seen by the three tabs 12, 13, 14 being visible below the first spreadsheet 2; the first spreadsheet 2 is assigned to the first tab 12. In order to switch between the exemplarily three spreadsheets in the first spreadsheet file 1, wherein the respective tabs may be activated by a user.

Each of the cells 3-11 is defined by its position in the spreadsheet 2 indicated by one column letter and one row number, e.g., the notation A2 may be used for the second cell 4 in the first column 15 and the second row 19.

A range of cells in a spreadsheet comprises two or more cells. Figure 1 depicts a range 21 of cells comprising exemplarily four cells 6, 7, 9, 10. For this range 21 of cells the notation B1:C2 may be used and for the comprised cells 6, 7, 9, 10 the notation B1, B2, C1, C2 may be used.

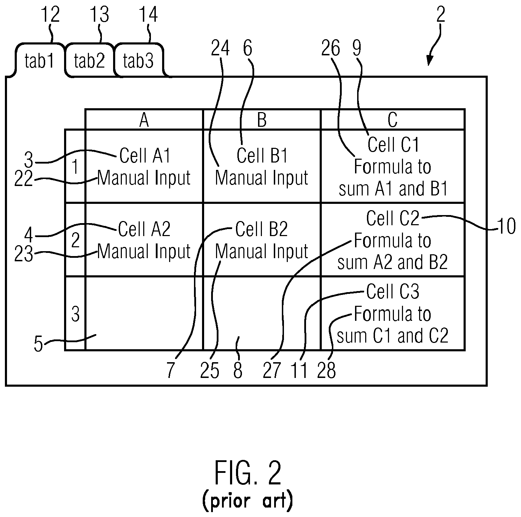

Figure 2 shows referencing of cells inside one spreadsheet to perform calculations or analysis as known from prior art. One feature of spreadsheet technology known from prior art is the capacity of referencing cells inside one spreadsheet to create a relation of interdependent values to perform calculations or analysis inside one spreadsheet. This feature can be called a "connection between cells", where the cells are connected and once connected, the source cell is used for a calculation in the destination cell.

In the example depicted in Figure 2, the third cell 11 of third column 17 (notation C3) depends on the first cell 9 of the third column 17 (notation C1) and the second cell 10 of the third column 17 (notation C2), and the first cell 9 of the third column 17 (notation C1) is dependent on the first cell 3 of the first column 15 (notation A1) and the first cell 6 of the second column 16 (notation B2), and the second cell 10 of the third column 17 (notation C2) is dependent on the second cell 4 of the first column 15 (notation A2) and the second cell 7 of the second column 16 (notation B2), thereby creating interdependency between the cells.

In the cells 3, 4, 6, 7 with the notations A1, A2, B1, B2 manual inputs 22, 23, 24, 25 by a user are entered, in cell 9 with the notation C1 a first formula 26 to sum A1 and B1 is performed, in cell 10 with the notation a second formula 27 to sum A2 and B2 is performed, and in cell 11 a third formula 28 to sum C1 and C2 is performed.

If any of the cells in the chain are altered via a manual input, it will automatically alter the next cell in the chain as long as the formula reference exists.

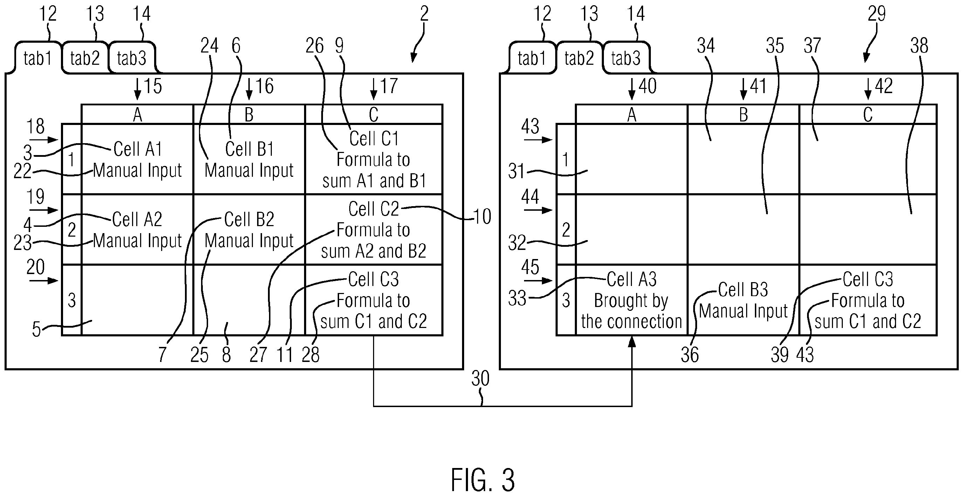

Figure 3 shows a first spreadsheet 2 that also is a source spreadsheet and a second spreadsheet 29 that also is a destination spreadsheet, wherein the first spreadsheet 2 and the second spreadsheet 29 are connected by a data connection 30. The first spreadsheet 2 is similar to the spreadsheet 2 as described in Figure 2. The first spreadsheet 2 and the second spreadsheet 29 may both be comprised by a single spreadsheet file 1, or the first spreadsheet 2 may be comprised by a first spreadsheet file and the second spreadsheet 29 may be comprised by a second spreadsheet file.

The second spreadsheet 29 exemplarily comprises three columns 40, 41, 42 with column letters A, B and C and three rows 43, 44, 45 with row numbers 1, 2 and 3, with cells 31, 32, 33, 34, 35, 36, 37, 38, 39. Each of the cells 31-39 is defined by its position in the spreadsheet 29 indicated by one column letter and one row number, e.g., the notation A2 may be used for the second cell 32 in the first column 40 and the second row 44.

A user defines, e.g., in a user interface on a client device, the first spreadsheet 2 to be the source spreadsheet 2, e.g., by indicating the identifier of the spreadsheet file in that the source spreadsheet 2 is comprised, and indicating the identifier of the source spreadsheet 2. The second spreadsheet 29 is defined by the user to be the destination spreadsheet, e.g., by indicating the identifier of the spreadsheet file in that the destination spreadsheet 29 is comprised, and indicating the identifier of the destination spreadsheet 29. In case, the source spreadsheet 2 and the destination spreadsheet 29 are comprised by the same spreadsheet file, the identifiers of the spreadsheet file are the same for the source spreadsheet 2 and the destination spreadsheet 29. In case, the source spreadsheet 2 and the destination spreadsheet 29 are comprised by the different spreadsheet files, the identifiers of the spreadsheet file of the source spreadsheet 2 and of the destination spreadsheet 29 are different.

In Figure 3, the user defined as source in the source spreadsheet 2 a single cell, namely the third cell 11 of the third column 17 and the third row 20, e.g., by indicating the notation C3 of this cell 11 in the source spreadsheet 2. Moreover, the user defined as destination in the destination spreadsheet 29 a single cell, namely the third cell 33 of the first column 40 and the third row 45, e.g., by indicating the notation A3 of this cell 33 in the destination spreadsheet 29.

The information relating to the definition of the source spreadsheet 2, the source, the destination spreadsheet 29, and the destination may be stored in a database for later access by a technology of enabling data referencing using a data connection 30 between a source spreadsheet 2 and a destination spreadsheet 29. Thus, by using the stored information, the technology is able to query, trigger, and run the data transfer through the data connection.

When the user has defined the source and the destination, the connection 30 is completed automatically, and data may be transported directly from the source to the destination without storing the data on an external server.

The connection 30 brings the results from the third cell 11 of the third column 17 (notation C3) of the first spreadsheet 1 to the third cell 33 of the first column 40 (notation A3) of the second spreadsheet 29, creating the possibility to use this value as the basis of calculation in the second spreadsheet 29.

The result from cell 28 with the notation C3 of the first spreadsheet 2 is used for the calculation of cell 39 with the notation C3 of the second spreadsheet 29 after it is transferred to cell 33 with the notation A3 of the second spreadsheet 29 via the connection 30. In cell 36 with the notation B3 of the second spreadsheet 29 a manual input by the user may be entered, and in cell 39 with the notation C3 of the second spreadsheet 29 a fourth formula 46 to sum A3 and B3 is performed.

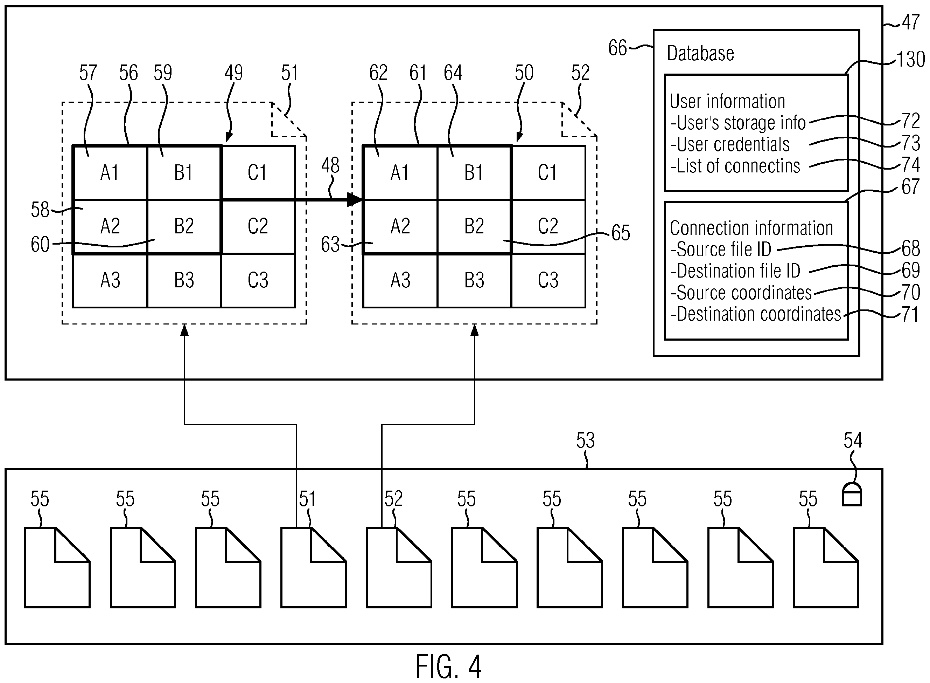

Figure 4 shows a computing environment 47 executing the technology of creating at least one data connection 48 between a source spreadsheet 49 and a destination spreadsheet 50. A plurality of spreadsheet files 55, a source spreadsheet file 51 and a destination spreadsheet file 52 are stored in an online storage 53, e.g., a cloud storage, of a user. The spreadsheet files 51, 52, 55 are stored and secure according to a security level 54 given by a provider of the online storage 53.

The source spreadsheet file 51 comprises the source spreadsheet 49, and the destination spreadsheet file 52 comprises the destination spreadsheet 50. As source 56 in the source spreadsheet 49 the user has defined a range of cells that comprises four cells 56, 57, 58, 59, wherein the range of cells may defined by the notation A1:B2, thus comprising the cells 56, 57, 58, 59 with the notations A1, A2, B1, B2. As destination 61 in the destination spreadsheet 50 the user has defined another range of cells that also comprises four cells 62, 63, 64, 65, wherein the range of cells may also defined by the notation A1:B2, thus comprising the cells 62, 63, 64, 65 with the notations A1, A2, B1, B2.

In a database 66 in the computing environment 47, or optionally in a database that may be accessed by the technology, connection information 67 is stored. The connection information 67 comprises information that may be used to establish the data connection 48 between the source spreadsheet 49 and the destination spreadsheet 50. The connection information 67 comprises at least an identifier of the source spreadsheet file 51 called 'Source file ID' 68, an identifier of the destination spreadsheet file 52 'Destination file ID' 69, an identifier of the source spreadsheet 49 and position of the source 56 called 'Source coordinates' 70, and an identifier of the destination spreadsheet 50 and position of the destination 61 called 'Destination coordinates' 71.

Furthermore, in the database 66 user information 130 is stored comprising information about the online storage 53 of the user called 'User's storage info' 72, comprising information about the user credentials that are granted by the user to access the spreadsheet files 51, 52, 55 in the online storage 53 called 'User credentials' 73, and a list of data connections 48 defined by the user called 'List of connections' 74.

From the information in the database 66 the technology knows where the user's spreadsheet files 51, 52, 55 are stored in the online storage 53, which of the spreadsheets 51, 52, 55 is the source spreadsheet 51 and which is the destination spreadsheet 52, the positions of the source 56, i.e., form where to get data, the positions of the destination 61, i.e., where to write the data. With this information, the technology may use the credentials granted by the user to access the user's directory of spreadsheet file 51, 52, 55 in the online storage 53, locate and open the source spreadsheet file 51, copy the data from the source 56, store the data in a temporary memory, locate and open the destination spreadsheet file 52, and write the copied data into the destination 61. The technology may repeat this process for every data connection the user has listed in the database 66.

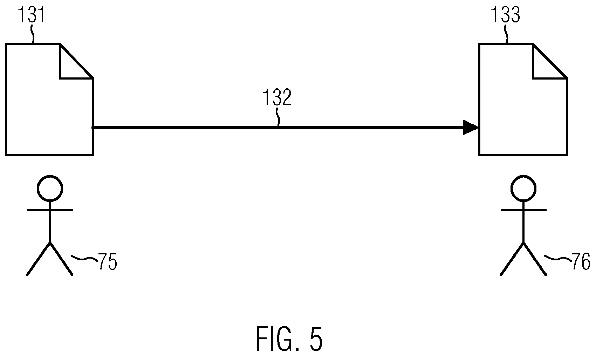

Figure 5 shows a data connection 132 between a source spreadsheet file 131 and a destination spreadsheet file 133, wherein the spreadsheet files 131, 133 have been generated with different formats. By using a kind of data connection as described above or below, it is possible to connect spreadsheet files of different formats. As shown in Figure 5, a first user 75 has generated a source spreadsheet file 131 in a first format and a second user 76 has generated a destination spreadsheet file 133 in a second format.

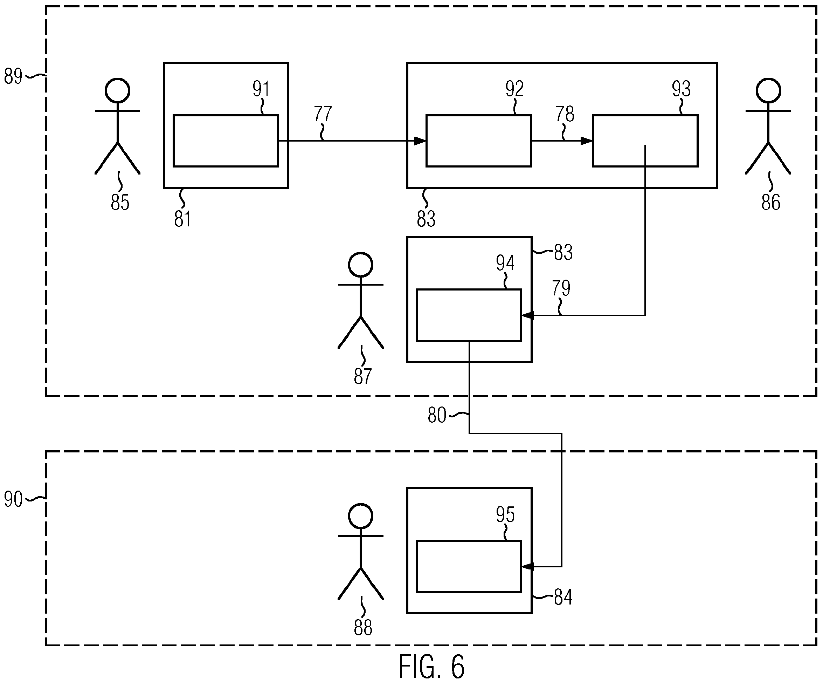

Figure 6 shows various data connections 77, 79, 80 between different spreadsheets 81, 82, 83, 84 and a referencing 78 inside one of the spreadsheets 82.

A first user 85 created a first spreadsheet 81 that is the source spreadsheet to a second spreadsheet 82 that has been created by a second user 86 and that is the destination spreadsheet, wherein the first spreadsheet 81 and the second spreadsheet 82 are connected by a first data connection 77. Original data 91 of the first spreadsheet 81 is transferred via the data connection 77 to the second spreadsheet 82, where it represents imported data 92 from the first user 85. Inside the second spreadsheet 82 a referencing 78 is established between the imported data 92 and modified data 93 that is using the imported data 92 as basis for further processing. The second spreadsheet 82 is a source spreadsheet for a third spreadsheet 83 that has been created by a third user 87, where the third spreadsheet 83 is a destination spreadsheet. The second spreadsheet 82 and the third spreadsheet 83 are connected by a second data connection 79. The modified data 93 of the second spreadsheet 93 is transferred via the second data connection 79 to the third spreadsheet 83, where it represents imported data 94 from the second user 86. The first user 85, the second user 86 and the third user 87 as well as their respective spreadsheets 81, 82, 83 are part of a first company 89.

It is also possible to establish a data connection across the first company 89 and a second company 90. A fourth user 88 and a fourth spreadsheet 84 that has been created by the fourth user 88 are part of the second company 90. The third spreadsheet 83 may be a source spreadsheet for the fourth spreadsheet 84, where the fourth spreadsheet 84 is a destination spreadsheet. The third spreadsheet 83 and the fourth spreadsheet 84 are connected by a third data connection 80. The imported data 94 of the third spreadsheet 83 may be transferred via the third data connection 80 to the fourth spreadsheet 84, where its represents imported data from the third user 87.

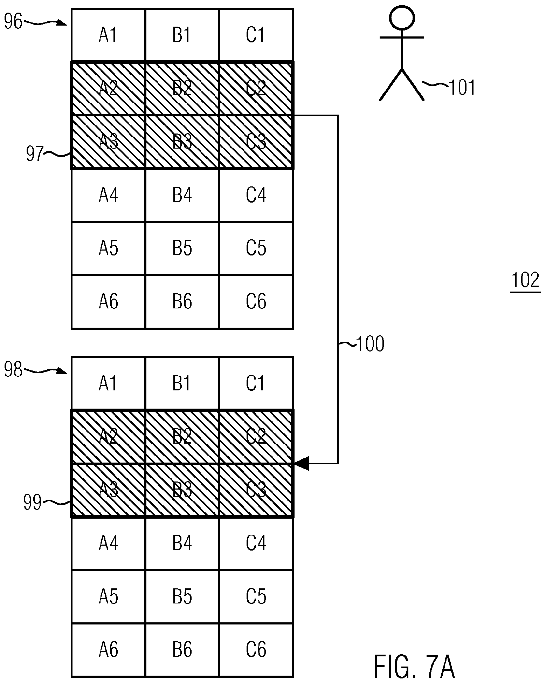

Figure 7A shows a graphic visualisation 102 of updates based on manual changes that are performed by a user 101 in the source 97 of the source spreadsheet 96. The updates are transferred from the source spreadsheet 96 to the destination spreadsheet 98 via the data connection 100 being established between the source spreadsheet 96 and the destination spreadsheet 98. The data connection 100 may detect a manual change by the user 101 in the source by automatic constant verifications, and may automatically perform the update, maintaining the destination spreadsheet 98 updated in near real-time.

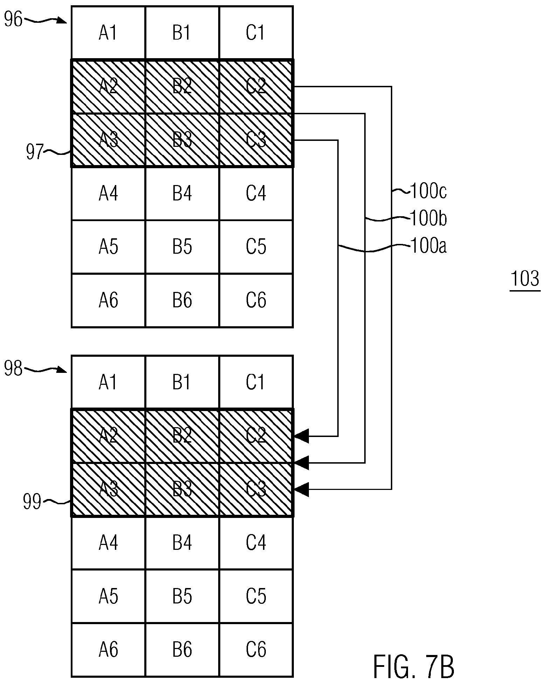

Figure 7B shows a graphic visualisation 103 of updates based on time, e.g., every hour. A first update 100a may be performed at 1 p.m., a second update 100b at 2 p.m., and a third update 100c at 3 p.m. For all these updates one data connection being established between the source spreadsheet 96 and the destination spreadsheet 98 is used.

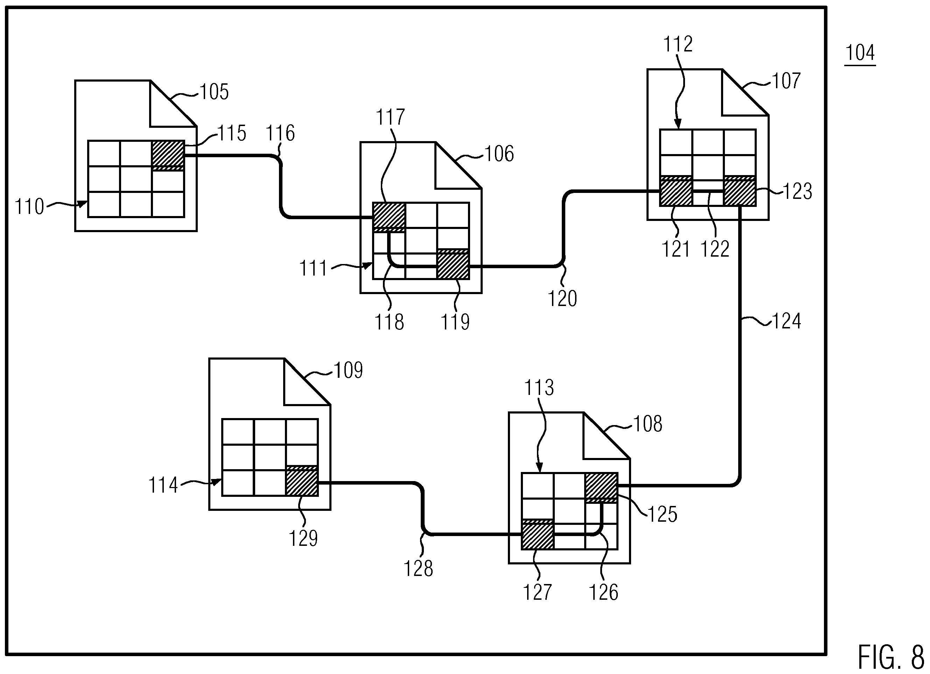

Figure 8 shows a graphic visualisation 104 of a trace route. When different spreadsheet files 105, 106, 107, 108, 109 are connected by data connections 116, 120, 124, 128, there exists a reference between the spreadsheet files 105, 106, 107, 108, 109, and the technology automatically may track where data originated from and is able to display a real-time map showing the exact route the data travels across spreadsheet files 105, 106, 107, 108, 109 and cells 115, 117, 119, 121, 123, 125, 127, 129. In the trace route shown in Figure 8, data is transferred from a first cell 115 of a first spreadsheet 110 in a first spreadsheet file 105 via a first data connection 116 to a second cell 117 in a second spreadsheet 111 of a second spreadsheet file 106. Inside the second spreadsheet 111 data is transferred via referencing 118 from the second cell 118 to a third cell 119, from this third cell 119 data is transferred to a fourth cell 121 in a third spreadsheet 112 of a third spreadsheet file 107 via a second data connection 120. Inside the third spreadsheet 112 data is transferred via referencing 122 from the fourth cell 121 to a fifth cell 123, from this fifth cell 123 data is transferred to a sixth cell 125 in a fourth spreadsheet 113 of a fourth spreadsheet file 108 via a third data connection 124. Inside the fourth spreadsheet 113 data is transferred via referencing 126 from the sixth cell 125 to a seventh cell 127, from this seventh cell 127 data is transferred to a eighth cell 129 in a fifth spreadsheet 114 of a fifth spreadsheet file 109 via a fourth data connection 128.

## Claims

1. A computer-implemented method for enabling data referencing using one or multiple data connections (30, 48, 77, 79, 80, 100, 116, 120, 128, 132) between one or multiple source spreadsheets and one or multiple destination spreadsheets, the method comprising the following steps:
defining, by a user (75, 76, 85, 86, 87, 88, 101), a first spreadsheet (2, 49, 96) to be the source spreadsheet, the first spreadsheet being of the user;
defining, by the user, a second spreadsheet (29, 50, 98) to be the destination spreadsheet;
defining, by the user, a source for a data connection in the source spreadsheet;
defining, by the user, a destination for the data connection in the destination spreadsheet, the data connection being from the source to the destination;
storing information defining the data connection, wherein the information is stored separate from the first spreadsheet and separate from the second spreadsheet, the information including the source and the destination; and
transferring data from the source to the destination through the data connection using the stored information defining the data connection.

2. The computer-implemented method of claim 1, wherein the step of defining, by the user, the source comprises defining the source as a single cell (3-11, 31-39, 57-60, 62-65), a range of cells (21, 56, 61), a tab (12, 13, 14) within the source spreadsheet, or all of the tabs (12, 13, 14) in the source spreadsheet, and
when the source is the single cell or the ranges of cells, then defining, by the user, the destination in the destination spreadsheet as a single cell or a range of cells, and
when the source is the tab or all the tabs, then defining, by the user, the destination spreadsheet as the destination.

3. The computer-implemented method of claim 1 or 2, wherein the source spreadsheet and the destination spreadsheet are stored in an online storage.

4. The computer-implemented method of one of claims 1 to 3, wherein the source spreadsheet and the destination spreadsheet are in a single spreadsheet file.

5. The computer-implemented method of claim 4, wherein the single spreadsheet file is defined by a single unique identifier.

6. The computer-implemented method of one of claims 1 to 3, wherein the source spreadsheet (49) is in a first spreadsheet file (51) and the destination spreadsheet (50) is in a second spreadsheet file (52), wherein the first spreadsheet file and the second spreadsheet file are different.

7. The computer-implemented method of claim 6, wherein the first spreadsheet file is defined by a first unique identifier and the second spreadsheet file is defined by a second unique identifier.

8. The computer-implemented method of claim 6 or 7, further comprising the steps of:
using credentials (75) granted by the user to access a directory of the user in an online storage (53) of the user;
locating and opening the first spreadsheet file;
copying data from a range of cells, a cell, or a tab of the source in the source spreadsheet of the first spreadsheet file;
storing the data in a temporary memory;
locating the second spreadsheet file;
transferring the copied data into the range of cells, the cell, or the tab in the destination spreadsheet of the second spreadsheet file; and
optionally closing the first spreadsheet file before transferring the copied data.

9. The computer-implemented method of one of claims 1 to 8, further comprising the step of automatically triggering transferring of the data in the data connection based on changes in a cell, a range of cells, or a tab in the source spreadsheet, or based on time.

10. The computer-implemented method of one of claims 1 to 9, after the step of transferring data from the source to the destination through the data connection using the stored information defining the data connection, further comprising the step of automatically tracking from where in the source spreadsheet the data in the destination spreadsheet originated, and the step of displaying a real-time map showing a route the data travelled across the first spreadsheet file, the second spreadsheet file, and one of range of cells, cell, and tab.

11. The computer-implemented method of one of claims 6 to 10, wherein the first spreadsheet file (131) is of a first user (75) and the second spreadsheet file (133) is of a second user (76), wherein the first user and the second user are different, or wherein the first spreadsheet and the second spreadsheet are of a single user.

12. The computer-implemented method of one of claims 1 to 11, wherein the first spreadsheet and the second spreadsheet are maintained in a closed or an opened state by the user during the defining steps.

13. The computer-implemented method of one of claims 4 to 12, wherein the spreadsheet file, or the first spreadsheet file and the second spreadsheet file are maintained in a closed or an opened state by the user during the defining steps.

14. The computer-implemented method of one of claims 1 to 13, wherein during the step of transferring data from the source to the destination through the data connection using the stored information defining the data connection, the source spreadsheet and the destination spreadsheet are kept closed or opened.

15. The computer-implemented method of one of claims 4 to 14, wherein during the step of transferring data from the source to the destination through the data connection using the stored information defining the data connection, the spreadsheet file, or the first spreadsheet file and the second spreadsheet filed are kept closed or opened.

16. The computer-implemented method of one of claims 1 to 15, wherein the step of storing the information defining the data connection, wherein the information is stored separate from the first spreadsheet and separate from the second spreadsheet comprises storing the information in a separate file, optionally on a separate computing device.

17. A computer-readable medium containing computer executable instructions which, when executed by a processor of a computing device, cause the computing device to perform a method of one of claims 1 to 16.
